## Europäisches Patentamt

## European Patent Office

## Office européen des brevets

(11) Publication number: **0 138 469**
**B1**

# EUROPEAN PATENT SPECIFICATION

(45) Date of publication of patent specification: **04.04.90**

(21) Application number: **84306586.3**

(22) Date of filing: **27.09.84**

(51) Int. Cl.⁵: **B 41 J 2/385**

(54) **Print head.**

(30) Priority: **27.09.83 JP 178537/83**
**27.09.83 JP 178536/83**
**29.09.83 JP 182126/83**

(43) Date of publication of application:
**24.04.85 Bulletin 85/17**

(45) Publication of the grant of the patent:
**04.04.90 Bulletin 90/14**

(84) Designated Contracting States:
**DE FR GB IT**

(56) References cited:

**PATENT ABSTRACTS OF JAPAN, vol. 7, no. 275
(M-261)1420r, 8th Dezember 1983**

**IBM TECHNICAL DISCLOSURE BULLETIN, vol. 6,
no. 11, April 1964, page 33, New York, US, J.J.
HAGOPIAN et al.: "Electrostatic print head and
method of manufacture"**

**PATENT ABSTRACTS OF JAPAN, vol. 4, no. 1
(E-163), 8th January 1980**

(73) Proprietor: **Matsushita Electric Industrial Co.,
Ltd.
1006, Oaza Kadoma
Kadoma-shi Osaka-fu, 571 (JP)**

(72) Inventor: **Yoshikawa, Yoshitaka
1 chome, 14-46, Nasuzukuki
Hirakata-shi Osaka-fu 573 (JP)**
Inventor: **Tsukamoto, Masahide
3 chome, 21-5-406, Tomiokita
Nara-shi Nara-ken, 631 (JP)**
Inventor: **Nishimura, Yutaka
22-11, Yanagida-cho
Hirakata-shi Osaka-fu 571 (JP)**
Inventor: **Ono, Hitoshi
5-5 C-27 105, Kourigaoka
Hirakata-shi Osaka-fu 573 (JP)**
Inventor: **Sano, Tetsuhiro
30-23, Miyukihigashimachi
Neyagawa-shi Osaka-fu 572 (JP)**

(74) Representative: **Crawford, Andrew Birkby et al
A.A. THORNTON & CO. Northumberland House
303-306 High Holborn
London WC1V 7LE (GB)**

Courier Press, Leamington Spa, England.

56 References cited:

**PATENT ABSTRACTS OF JAPAN, vol. 4, no. 132
(M-32)614r, 17th September 1980
G.S. BRADY: "Materials handbook; An
encyclopedia for purchasing managers,
engineers, executives and foremen", 10th
edition, 1971, pages 112-113, McGraw-Hill, New
York, US**

**Description**

This invention relates to a print head for printing onto a printing medium patterns or images converted from electric signals.

Recently, office automation has required various terminals, among which a printing apparatus to convert electric signals into visible images, the so-called printer, has been in great demand so that printing apparatus of various systems have hitherto been produced.

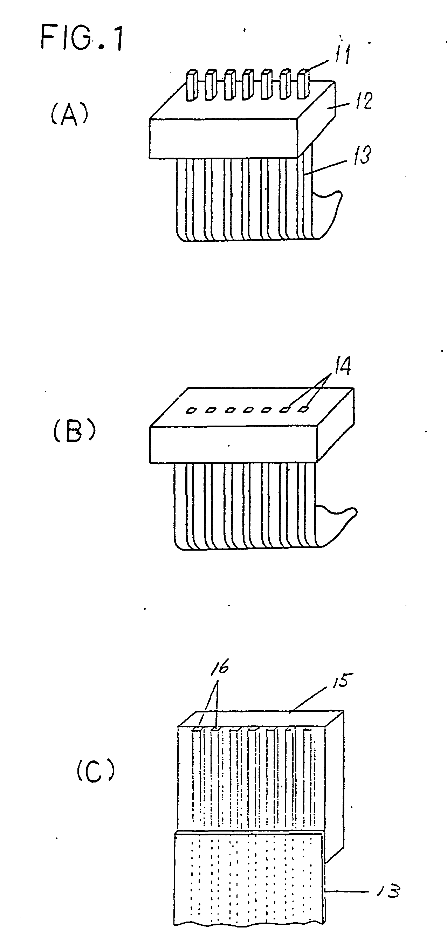

Printing apparatus using an electrosensitive paper comprising a vapor coated aluminum layer, a black layer and a substrate layer, allows an electrode to contact the vapor coated aluminum layer and applies a voltage to the electrode to remove the vapor coated aluminum layer by means of heating or discharge breakdown so as to expose the black layer for performing printing. Hence, in order to print a good quality image, a print head comprising exposed stylii 11 for ensuring the contact has been produced as shown in Figure 1-(A), in which reference numeral 12 designates a fixing member of synthetic resin and 13 designates lead wires. A print head having electrode stylii not projecting but embedded in the resin has also been proposed as shown in Figure 1-(B), the resin around each electrode 14 is broken so that dust created in printing is deposited into the broken resin, resulting in that insulation between the electrodes deteriorates leading to improper printing. When the print head comprises an alumina (Al₂O₃) substrate 15 with tungsten electrodes 16 as shown in Figure 1-(C), since the alumina substrate of the fixing member is hard, it will damage the electrosensitive paper during printing, resulting in improper printing. Therefore, the projecting electrode stylii should be thick and hard so that it is difficult to produce a multi-stylus print head and a print head enabling high resolution printing.

Other recording systems, such as electrolytic electrography and electro-carbon-transfer printing (in the Journal of the Institute of Image Electronics Engineers of Japan Vol. 11, No. 1 P3~P9 (1982)), require the same print heads as the above.

An object of the invention is to provide a print head which is free from the above defect and capable of performing high resolution printing, and has a long lifetime.

The present invention provides a print head comprising elongate electric conductors and a fixing member containing hexagonal boron nitride for fixing the electric conductors, the elongate electric conductors being exposed at the utmost ends so that electric signals are applied between the conductors and the printing medium to thereby print on the printing medium images corresponding to the electric signals.

The print head of the invention enables printing superior in print quality because the insulating material around the electric conductors is prevented from breakdown during printing; because no dust attaches to the insulating material during printing; and because the print head, even when moving in press-contact with the printing medium, does not damage the printing medium. Furthermore, the print head of the invention has the electrodes not projecting but embedded into or laminated on the fixing member, so that thin electrodes can be used and length thereof can be freely selected, to obtain a print head of high resolution and of a long lifetime.

Features and advantages of the invention will become more apparent from the following detailed description of embodiments thereof when taken in connection with the accompanying drawings, in which:

Figures 1-(A) through -(C) are perspective views of conventional print heads;

Figure 2 is a perspective view explanatory of a print head using a hexagonal boron nitride sintered body;

Figure 3 is a perspective view explanatory of a print head using a mold of a mixture of hexagonal boron nitride with thermosetting resin; and

Figures 4-(a) and -(b) are perspective views of modified embodiments of the invention.

Figure 5 is a perspective view of another modified embodiment of the invention.

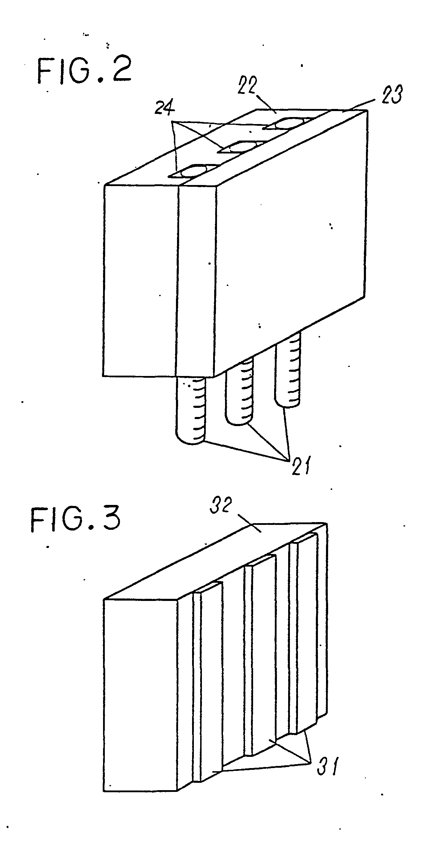

Embodiments of a print head of the invention will be described with reference to Figures 2 to 5 of the drawings.

Embodiment 1

Referring to Figure 2, a print head of the invention is shown, in which reference numeral 21 designates elongate electrical conductors (for example, copper wires), and 22 and 23 designate fixing members made of sintered bodies of hexagonal boron nitride. The sintered body is, for example, the "Denka Boron Nitride" sintered body manufactured by Denki Kagaku Kogyo Co., Ltd., Japan, the hexagonal boron nitride sintered body 22 of grade HC being provided with grooves 24 of 60 μm in pitch, 65 μm in width, and 60 μm in depth by use of a dicing saw. Covered wires 21 of 60 μm in diameter are respectively embedded into the grooves 24. A sintered body 23 of the hexagonal boron nitride is used to fix the covered wires 21.

This print head, when mounted to a printing apparatus using an electrosensitive paper has the following advantages:

① Superior printing quality (stability in dot form after 50,000 printed characters).
② Dust produced during printing is hard to attach to the head.
③ Prints without damaging the electrosensitive paper.
④ Free from deterioration of the fixing member caused by heat generated during printing.
⑤ Recordable in high resolution.

These advantages result from the use of hexagonal boron nitride which has superior properties of lubricity, heat-resistance, electric insulation, wear-resistance, and workability.

In this embodiment, covered copper wires are used as the electric conductors, but alternatively bare wires may also be used. However, since pitch between the electric conductors is restricted as the print head increases in resolution, the wiring process requires careful attention when the conductors are not covered by electric insulators lest the electrical conductors contact each other. It eases the wiring process to use the conductors covered with electrical insulators. This consideration applies to the following embodiments using covered copper wires as wire material for electrical conductors.

Embodiment 2

Sintered bodies of hexagonal boron nitride, as the fixing member of the same print head in construction as the embodiment 1, respectively containing hexagonal boron nitride of 65, 70, 75, 80, 85, 95, 99 (other components being $B_2O_3$, CaO, $SiO_2$ or $Al_2O$) and 100 wt % were provided and the same method as the embodiment 1 was used to obtain print heads. The print heads were tested in performance by printing characters onto the electrosensitive paper. The results of evaluation are shown in Table 1.

TABLE 1
Evaluation of print head for h-BN content

| h-BN Content wt. % | 65 | 70 | 75 | 80 | 85 | 90 | 95 | 99 | 100 |
|---|---|---|---|---|---|---|---|---|---|
| Print quality | x | Δ | o | o | o | o | o | o | o |
| Cleanness | o | o | o | o | o | o | o | o | o |
| Hardness | x | Δ | o | o | o | o | o | o | o |
| Uninflammability | o | o | o | o | o | o | o | o | o |
| Workability | o | o | o | o | o | o | o | o | Δ |
| Total evaluation | x | Δ | o | o | o | o | o | o | Δ |

where
   h-BN: Hexagonal boron nitride.

"Print quality" in Table 1 is evaluation of stability in dot form after printing 50,000 characters. Cleanness is the dirt on the tips of print heads after printing 50,000 characters. "Hardness" is evaluation of whether or not the electrosensitive paper is printable without being injured. "Uninflammability" conforms to the UL Standard 94 and is evaluated by a specimen of 1/16 inch in thickness. "Workability" evaluates easiness to produce the sintered body and to machine the print head.

As seen from Table 1, for the content of 65 wt. % of hexagonal boron nitride, the fixing member damaged the electrosensitive paper during printing, thereby deteriorating print quality. For the content of 70 wt. % of the same, the electrosensitive paper was not damaged by the sintered fixing member, thereby being superior in print quality. For the content of 70 wt. %, however, the electrosensitive paper might sometimes be injured due to contact of print head with the electrosensitive paper. Since the fixing member in the content of 100 wt. % is difficult to sinter (the sintering condition therefor requires higher temperature and pressure than other sintered bodies), it is preferable to use the hexagonal boron nitride sintered body in the content of 75 to 99 wt. % of hexagonal boron nitride.

Embodiment 3

This embodiment of the print head of the invention is the same in construction as the embodiment 1, which uses a mould of a hardened mixture of hexagonal boron nitride with thermosetting resin (for example, the mixture of Denka Boron Nitride Powder manufactured by Denki Kagaku Kogyo Co., Ltd. with epoxy resin) serving as the fixing member. The print head is so constructed that the mould (containing hexagonal boron nitride of 60 wt. %) of hardened mixture of hexagonal boron nitride powder of the grade GP: Denka Boron Nitride Powder by Denki Kagaku Kogyo Co., Ltd., with epoxy resin (bisphenol A type resin) is provided with grooves each of 100 μm in pitch, 65 μm in width and 60 μm in depth by use of a dicing saw. Covered copper wires of 60 μm in diameter are embedded as the elongate electrical conductors into the grooves respectively. Thereafter a mould of mixture of hexagonal boron nitride with epoxy resin and equivalent to the aforesaid mould is used to fixedly press the covered copper wires.

The thus obtained print head has the same advantages as described in the embodiment 1.

Next, the print heads using, as the fixing member, the moulds which contain hexagonal boron nitride of 0, 10, 20, 30, 40, 50, 60, 70, 80, 90 or 95 wt. %, respectively, mixed with epoxy resin and hardened, were mounted onto the printing apparatus using the electrosensitive paper. Evaluation of the results of this experiment is shown in Table 2.

TABLE 2

Evaluation of print head related to h-BN content

| h-BN Content: | 0 | 10 | 20 | 30 | 40 | 50 | 60 | 70 | 80 | 90 | 95 |
|---|---|---|---|---|---|---|---|---|---|---|---|
| Print quality | x | x | Δ | o | o | o | o | o | o | o | — |
| Cleanness | x | x | Δ | o | o | o | o | o | o | o | — |
| Hardness | Δ | Δ | o | o | o | o | o | o | o | o | — |
| Uninflammability | x | x | x | Δ | o | o | o | o | o | o | — |
| Workability | o | o | o | o | o | o | o | o | o | Δ | x |
| Total evaluation | x | x | Δ | Δ | o | o | o | o | o | Δ | x |

where
h-BN: Hexagonal boron nitride.

In Table 2, the print quality, cleanness, hardness, uninflammability and workability are evaluated similarly to the embodiment 1. As seen from Table 2, for the hexagonal boron nitride content of 10 or less wt. %, surroundings of electrodes, as described in the conventional example, are broken by the heat generated during printing so that dust produced during printing is attached to the electrodes, thereby creating deformation or disconnection of the conductors to make the print head unusable. Also, when the content of hexagonal boron nitride exceeds 95 wt. %, the mould is not obtainable (broken to pieces), whereby the print head has not been evaluated.

From the above, the print head using the fixing member comprising a mould containing 20 to 90 wt. % of hexagonal boron nitride is suitable for use. Preferably, the print head of the fixing member of the mould containing 40 to 80 wt. % of hexagonal boron nitride is remarkably effective.

Embodiment 4

Figure 3 is a perspective view of the fourth embodiment of the invention, in which reference numeral 31 designates electrical conductors (of, for example, copper) each in the form of a stripe, and 32 designates a moulded hardened mixture of hexagonal boron nitride with thermosetting resin (for example, Denka Boron Nitride Powder by Denki Kagaku Kogyo Co., Ltd. with epoxy resin). The print head shown in Figure 3 is so constructed that a hardened moulded member formed by mixing hexagonal boron nitride powder with epoxy resin (the moulded member containing hexagonal boron nitride of 60 wt. %), is coated with a layer of copper 35 μm in thickness by means of electroless plating, and thereafter the stripe electrodes (of 50 μm in interval and 50 μm in width) are formed by photo-etching.

This print head, when mounted to the printing apparatus using the electrosensitive paper, has the same characteristics as the embodiment 1.

Next, moulded members formed by mixing epoxy resin with hexagonal boron nitride in the content of 0, 10, 20, 30, 40, 50, 60, 70, 80, 90 or 95 wt. % and hardened, as the fixing member, were provided to form print heads. These print heads were subjected to the print test by using the electrosensitive paper. The results of evaluation of the print head were the same as the embodiment 3.

Embodiment 5

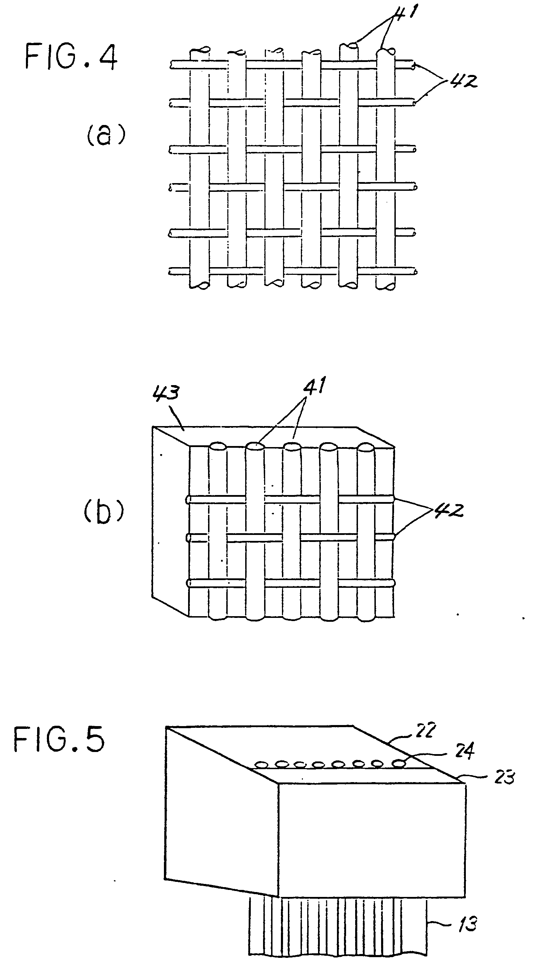

Figure 4-(a) is a front view of a cloth-like member, in which reference numeral 41 designates electrical conductors (for example, copper wires) and 42 designates electrical insulators (of, for example, polyester), which is easily obtainable by using an ordinary weaving machine. Figure 4-(b) shows a print head using the cloth-like member, in which reference numeral 41 designates electrical conductors (of, for example, copper), 42 designates electrical insulators (of, for example, polyester), and 43 designates a moulded member formed by mixing hexagonal boron nitride with thermosetting resin (mixing, for example, Denka Boron Nitride Powder by Denki Kagaku Kogyo Co., Ltd. with epoxy resin) and hardening the mixture. Each of the electrical conductors is a copper wire of 50 μm in diameter and each of the electrical insulators is a polyester string of 20 μm in diameter, pitch between each two electrical conductors being 100 μm. The cloth-like member is laminated on to a moulded member 3 mm in thickness comprising a mixture of hexagonal boron nitride (in the content of 60 wt. %) with epoxy resin (bisphenol A type resin) so that the sheet-like moulded member is hardened and simultaneously the cloth-like member is fixed thereto. Then, the moulded member is shaved to expose the utmost ends of the electrical conductors, thereby providing a print head with 10 conductors per millimeter. Such print head when mounted in the printing apparatus and used for printing on electrosensitive paper gave the same characteristics as the embodiment 1. Next, the print heads using, as the fixing member, mixtures of epoxy resin with hexagonal boron nitride in the content respectively of 0, 10, 20, 30, 40, 50, 60, 70, 80, 90 and 95 wt. %, were provided. These print heads were subjected to the print test by using the electrosensitive paper for printing thereon. The results of evaluation of the print heads were the same as the embodiment 3.

Embodiment 6

A modified embodiment of a print head of the invention is provided which is the same in construction as the embodiment 1, and uses a moulded member as the fixing member for elongate electrical conductors, the moulded member comprising a mixture of hexagonal boron nitride and talc mixed with thermosetting resin (for example, Denka Boron Nitride Powder by Denki Kagaku Kogyo Co., Ltd., talc powder by Nihon Talc Co., Ltd., Japan, and epoxy resin) and hardened. The print head is so constructed that a mixture of Denka Boron Nitride Powder of grade GP manufactured by Denki Kagaku Kogyo Co., Ltd., talc powder of purity of at least 99% manufactured by Nihon Talc Co., Ltd., is mixed with epoxy resin (bisphenol A type resin) and hardened to form a moulded member (containing 60 wt. % of the mixture of hexagonal boron nitride and the hexagonal boron nitride in the content of 25 wt. %) so that the member is provided with grooves of 100 μm in pitch, 65 μm in width and 60 μm in depth by use of a dicing saw. Covered copper wires are embedded as the elongate electrical conductors, so that a mould equivalent to the mould of mixture of hexagonal boron nitride, talc and epoxy resin, presses the covered copper wires and fixes them.

This print head has the same characteristics as the embodiment 1 when mounted to the print apparatus using the electrosensitive paper for printing.

Since the hexagonal boron nitride is superior in characteristics, but is expensive material, the print head becomes expensive to produce. On the other hand, talc is inexpensive but somewhat inferior to hexagonal boron nitride in characteristics. Hence, the hexagonal boron nitride and talc were combined so that a mixing ratio to satisfy both the characteristic and manufacturing cost was found.

The mould of hexagonal boron nitride and talc in a different mixing ratio and contained in epoxy resin, was used as the fixing member to thereby obtain the print head by the aforesaid method. The print head was mounted to the printing apparatus using the electrosensitive paper so that an optimum mixing ratio of hexagonal boron nitride and talc was studied and evaluated. The results of evaluation are shown in Table 3. The Table 3 is checked of items as the same as Table 2 and show the total evaluation.

TABLE 3

Evaluation as print head in relation to mixing ratio of hexagonal boron nitride and talc

| | | Talc content | | | | | | |
|---|---|---|---|---|---|---|---|---|
| | | 5 | 10 | 20 | 30 | 40 | 45 | 50 |
| Hexagonal boron nitride content | 5 | x | x | Δ | o | o | o | o |
| | 10 | x | x | o | o | o | o | o |
| | 20 | Δ | o | o | o | o | o | o |
| | 30 | o | o | o | o | o | o | o |
| | 40 | o | o | o | o | o | o | Δ |
| | 45 | o | o | o | o | o | Δ | x |
| | 50 | o | o | o | o | Δ | x | x |

In Table 3, when the total content of hexagonal boron nitride and talc is 20 or less wt. %, the surroundings of electrodes, as described in the conventional example, are broken by the heat generated during printing and dust produced during printing is attached to the print head to cause deformation or disconnection of the electrode, thereby making the print head unusable. Also, when a total content of hexagonal boron nitride and talc exceeds 95 wt. %, the mould is not obtainable (broken to pieces), whereby the print head was impossible to be evaluated.

From the above, it is preferable to produce the print head by using, as the fixing member, the mould of hexagonal boron nitride and talc in the total content of 25 to 90 wt. %. In a case where the print heads using, as the fixing member, moulds in a range of the content of hexagonal boron nitride of less than 5 wt. % and that of talc of 20 or more wt. % were evaluated, the superior characteristics of hexagonal boron nitride were not useful, but when the content of hexagonal boron nitride was 5 or more wt. %, the characteristics of hexagonal boron nitride were developed to be effective.

In other words, it is appreciated that the mould containing at least 5 wt. % of hexagonal boron nitride and the total content of 25 to 90 wt. % of mixture of hexagonal boron nitride and talc is used as the fixing member.

### Embodiment 7

This embodiment is the same in construction as the embodiment 3, in which the print head used, as the fixing member, a mould of hardened mixture of hexagonal boron nitride, talc and thermosetting resin (for example, Denka Boron Nitride Powder by Denki Kagaku Kogyo Co., Ltd., talc powder by Nihon Talc Co., Ltd., and epoxy series resin). The print head is so constructed that the mixture of Denka Boron Nitride Powder of grade GP and talc powder of purity of 99 or more % by Japan Talc Co., Ltd. is mixed with epoxy resin (bisphenol A type resin) and then hardened to form a mould (a mixture of hexagonal boron nitride and talc in the content of 60 wt. %, the content of hexagonal boron nitride being 25 wt. %). The mould is laminated of copper of 35 μm in thickness by means of electroless plating, and thereafter stripe electrodes (of 50 μm in interval and 50 μm in width) are formed by photoetching.

This print head, when mounted to the printing apparatus using the electrosensitive paper for printing, has the same advantages as the embodiment 1. The mixing ratio of hexagonal boron nitride and talc was evaluated to be the same as that of the embodiment 7.

### Embodiment 8

Another modified embodiment of the print head, which is the same in construction as the embodiment 4, and used a cloth-like member, which is woven of electrical conductors for one of warp and woof and woven of electrical insulators for the other. The electrical conductors use copper wires of 50 μm in diameter and the electrical insulators are polyester to thereby form the cloth-like member. The pitch of the electrical conductors is 100 mm. The cloth-like member is laminated on a sheet mould of 3 mm in thickness, comprising a mixture of hexagonal boron nitride of grade GP: Denka Boron Nitride Powder by Denki Kagaku Kogyo Co., Ltd. and talc powder in purity of 99 or more % and epoxy resin (bisphenol A type resin) mixed with the mixture, so that the sheet mould is hardened and simultaneously the cloth-like member is fixed thereto. The sheet mould contained 60 wt. % of the mixture of hexagonal boron nitride and talc (the content of hexagonal boron nitride being 25 wt. %). After the sheet mould is fixed to the cloth-like member, the fixing member is shaved so that the tips of electrical conductors are exposed to thereby have obtained print heads of 10 electrodes per millimeter. The print head, when mounted to the printing apparatus using the electrosensitive paper for printing, has the same advantages as those of the embodiment 1. The result of evaluation of the mixing ratio of hexagonal boron nitride and talc was the same as the embodiment 7.

In addition, embodiments of the print head for the printing apparatus using the electrosensitive paper have been described, but the print heads of the invention can be applied to other printing apparatus. For example, the print head of the invention is applicable to a printing apparatus using an electrosensitive medium, electrolytic electrography medium, or electro-carbon-transfer medium, for the printing medium. The electrical conductors are not limited to copper, but may be an other electrical conductor such as stainless steel, nickel, tungsten, and molybdenum.

Further, in the foregoing embodiments, it is more preferable to make tapered the surface of the fixing member in contact with the printing medium so as to assure the good contact with the printing medium, as shown in Figure 5.

Although several embodiments have been described, they are merely exemplary of the invention and not to be construed as limiting, the invention being defined solely by the appended claims.

### Claims

1. A print head for printing on a printing medium an image corresponding to an electric signal, comprising:

    elongate electrical conductors (21) applied with said electric signal; and

    fixing means (22, 23) for fixing said electrical conductors (21) so that one end of said electrical conductors are exposed at a surface of said fixing means to be in contact with said printing medium, wherein said fixing means (22, 23) is made of a material containing hexagonal boron nitride.

2. A print head according to claim 1, wherein said electrical conductors are in the form of wire rods embedded in said fixing means.

3. A print head according to claim 2, wherein said wire rods are respectively covered with electrical insulators.

4. A print head according to claim 1, wherein said electrical conductors are in the form of stripes (31) laminated on said fixing means (32).

5. A print head according to claim 1, wherein said electrical conductors are in the form of a cloth-like member, which is woven of electrical conductive threads (41) for one of warp and woof and of electrical insulative threads (42) for the other.

6. A print head according to any one of the preceding claims, wherein said fixing means is a sintered body containing at least 70 weight % of hexagonal boron nitride.

7. A print head according to any one of claims 1 to 5 wherein said fixing means comprises a moulded member of hexagonal boron nitride and thermosetting resin.

8. A print head according to claim 7, wherein the content of said hexagonal boron nitride is 20 to 90 weight %.

9. A print head according to any one of claims 1 to 5 wherein said fixing means is a moulded member comprising thermosetting resin and a mixture of hexagonal boron nitride and talc.

10. A print head according to claim 9, wherein the content of said mixture is 25 to 90 weight % and the content of said hexagonal boron nitride is at least 5 weight %.

## Patentansprüche

1. Ein Druckkopf zum Drucken eines Bildes, das einem elektrischen Signal entspricht, auf einen Druckträger mit:

verlängerten elektrischen Leitern (21), die mit dem elektrischen Signal belegt sind; und mit

einer Befestigungsvorrichtung (22, 23) zum Befestigen der elektrischen Leiter (21), so daß ein Ende der elektrischen Leiter an einer Oberfläche der Befestigungsvorrichtung offenliegt, um mit dem Druckträger in Berührung zu kommen,

wobei die Befestigungsvorrichtung (22, 23) aus einem Material besteht, das hexagonales Bornitrid enthält.

2. Ein Druckkopf nach Anspruch 1, wobei die elektrischen Leiter in der Form von Kabelstäben in der Befestigungsvorrichtung eingebettet sind.

3. Ein Druckkopf nach Anspruch 2, wobei die Kabelstäbe jeweils mit elektrischen Isolatoren überzogen sind.

4. Ein Druckkopf nach Anspruch 1, wobei die elektrischen Leiter in der Form von Streifen (31) schichtweise auf der Befestigungsvorrichtung (32) liegen.

5. Ein Druckkopf nach Anspruch 1, wobei die elektrischen Leiter in der Form eines stoffartigen Elements vorliegen, das aus elektrisch leitenden Fäden (41) für eines von Kette und Schuß und aus elektrisch isolierenden Fäden (42) für das andere gewoben ist.

6. Ein Druckkopf nach einem der vorhergehenden Ansprüche, wobei die Befestigungsvorrichtung aus einem gesinterten Körper mit wenigstens 70 Gewichtsprozent hexagonalen Bornitrids besteht.

7. Ein Druckkopf nach einem der Ansprüche 1—5, wobei die Befestigungsvorrichtung einen in einer Form hergestellten Körper aus hexagonalem Bornitrid und einem aushärtendem Harz aufweist.

8. Ein Druckkopf nach Anspruch 7, wobei der Anteil des hexagonalen Bornitrids 20 bis 90 Gewichtsprozent beträgt.

9. Ein Druckkopf nach einem der Ansprüche 1—5, wobei die Befestigungsvorrichtung ein in einer Form hergestellter Körper mit aushärtendem Harz und einer Mischung aus hexagonalem Bornitrid und Talk ist.

10. Ein Druckkopf nach Anspruch 9, wobei der Anteil der Mischung 25 bis 90 Gewichtsprozent und der Anteil des hexagonalen Bornitrids wenigstens 5 Gewichtsprozent beträgt.

## Revendications

1. Tête d'impression, sur un support d'impression, d'une image correspondant à un signal électrique, comprenant:

des conducteurs électriques allongés (21) auxquels le signal électrique est appliqué, et

un dispositif de fixation (22, 23) destiné à fixer les conducteurs électriques (21) de manière qu'une extrémité des conducteurs électriques soit exposée à une surface du dispositif de fixation destinée à être au contact du support d'impression,

le dispositif de fixation (22, 23) étant formé d'un matériau contenant du nitrure de bore hexagonal.

2. Tête d'impression selon la revendication 1, dans laquelle les conducteurs électriques sont sous forme de barreaux métalliques enrobés dans le dispositif de fixation.

3. Tête d'impression selon la revendication 2, dans laquelle les barreaux métalliques sont revêtus d'isolant électrique.

4. Tête d'impression selon la revendication 1, dans laquelle les conducteurs électriques sont sous forme de bandes plates (31) collées sur le dispositif de fixation (32).

5. Tête d'impression selon la revendication 1, dans laquelle les conducteurs électriques sont sous forme d'un élément analogue à une étoffe qui est formé par tissage de fils conducteurs de l'électricité (41) comme chaîne ou comme trame, et de fils isolants de l'électricité (42) comme trame ou comme chaîne respectivement.

6. Tête d'impression selon l'une quelconque des revendications précédentes, dans laquelle le dispositif de fixation est un corps fritté contenant au moins 70% en poids de nitrure de bore hexagonal.

7. Tête d'impression selon l'une quelconque des revendications 1 à 5, dans laquelle le dispositif de fixation est un élément moulé contenant du nitrure de bore hexagonal et une résine thermodurcissable.

8. Tête d'impression selon la revendication 7, dans laquelle la teneur en nitrure de bore hexagonal est comprise entre 20 et 90% en poids.

9. Tête d'impression selon l'une quelconque des revendications 1 à 5, dans laquelle le dispositif de fixation est un élément moulé contenant une résine thermodurcissable et un mélange de nitrure de bore hexagonal et de talc.

10. Tête d'impression selon la revendication 9, dans laquelle la teneur en mélange est de 25 à 90% en poids, et la teneur en nitrure de bore hexagonal est d'au moins 5% en poids.

# FIG.1

(A)

(B)

(C)

FIG.2

FIG.3

FIG.4

(a)

(b)

FIG.5